# EUROPEAN PATENT APPLICATION

(11) **EP 2 184 804 A1**
(43) Date of publication of application: **12.05.2010**
(21) Application number: 09168982.8
(22) Date of filing: 28.08.2009
(51) Int. Cl.: H01Q 1/28, B64C 11/00, B64C 27/20

(54) **Ducted fan unmanned aerial vehicle conformal antenna**

(30) Priority: 07.11.2008 US 267246
(71) Applicant: Honeywell International, Inc., Morristown NJ 07962 (US)
(72) Inventor: Collette, Daniel Ross, Morristown, NJ 07962-2245 (US); Helsing, JR. Joseph Scott, Morristown, NJ 07962-2245 (US)
(74) Representative: Buckley, Guy Julian

(57) **Abstract**

A conformal antenna (162) for an unmanned aerial vehicle is provided that may be applied to a surface (164) of the vehicle. The conformal antenna may be integrated with a surface on the vehicle, and is used to effectively transmit and receive video, command and/or control signals. The conformal antenna allows for the transmission and reception of signals from any direction, and may work with signals greater than a quarter wavelength. A protective layer may be placed over the conformal antenna.

## Description

This invention was made with Government support under Prime Contract Number W56HZV-05-C-0724 awarded by the United States Army. The Government may have certain rights in this invention.

### FIELD

The present invention relates generally to unmanned aerial vehicles. More particularly, the present invention relates to a conformal antenna for use with a ducted fan unmanned aerial vehicle.

### BACKGROUND

Unmanned aerial vehicles ("UAVs") are remotely piloted or self-piloted aircraft that can carry cameras, sensors, communications equipment, or other payloads. A UAV is capable of controlled, sustained, level flight and is powered by either a jet or an engine. The UAVs may be remotely controlled or may fly autonomously based on pre-programmed flight plans or more complex dynamic automation systems.

UAVs have become increasingly used for various applications where the use of manned flight vehicles is not appropriate or is not feasible. Such applications may include military situations, such as surveillance, reconnaissance, target acquisition, data acquisition, communications relay, decoy, harassment, or supply flights. These vehicles are also used in a growing number of civilian applications, such as firefighting when a human observer would be at risk, police observation of civil disturbances or crime scenes, reconnaissance support in natural disasters, and scientific research, such as collecting data from within a hurricane.

UAVs rely on the transmission and reception of signals to communicate with a remote controller. Currently, whip antennas are used to transmit and receive signals on ducted fan UAVs. Whip antennas typically comprise an antenna with a wire mounted, usually vertically, with one end adjacent to a ground plane. Being vertically mounted causes the whip antenna to have a vertical polarization: the antenna will have a conical blind zone directly above it. Thus the signal, both incoming and outgoing, can be blocked by the ducted fan UAV when the UAV is oriented such that it is between the operator and the antenna. Additionally, although a longer antenna is desired as the length of the antenna determines it wavelength, a longer antenna adds significant weight to the vehicle. Due to weight constraints, currently the wavelength limit for a whip antenna on a UAV is a quarter wave.

Both of these issues apply to video signals, as well as command and control signals. If the antenna has a blind zone, data transfer and effective communication during operation will be hindered. Similarly, if the wavelength limit is shorter due to weight constraints, data transfer and effective communication will not be possible at certain distances.

### SUMMARY

In accordance with the present invention, a conformal antenna for use with a ducted fan core for an unmanned aerial vehicle is provided. This conformal antenna will be able to effectively transmit and receive video, command and control signals.

In one embodiment, the ducted fan core comprises a frame. The frame comprises a first surface and at least one conformal antenna that is integrated with at least a portion of the first surface.

In another embodiment, an unmanned aerial vehicle comprises a ducted fan, wherein the ducted fan comprises a plurality of surfaces that form the exterior of the fan. The unmanned aerial vehicle also comprises at least one conformal antenna on a surface of the fan.
The conformal antenna may be integrated into the mold prior to forming the first surface, or the conformal antenna may be applied to a finished duct surface.

This vehicle will provide a radiation pattern for transmission and reception in virtually any orientation of the air vehicle, allowing for clear video transmission and uninterrupted command and control signals.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Various embodiments are described herein with reference to the following drawings. Certain aspects of the drawings are depicted in a simplified way for reason of clarity. Not all alternatives and options are shown in the drawings and, therefore, the invention is not limited in scope to the content of the drawings. In the drawings:
Figure 1 is a perspective view of a ducted fan according to one embodiment of the invention;
Figure 2 is a perspective view of a conformal antenna integrated with the duct surface;
Figure 3a is a perspective view of a conformal antenna applied to a finished duct surface; Figure 3b is a cross-sectional view of the conformal antenna of Figure 3a;
Figure 4a is an exemplary conformal antenna pattern;
Figure 4b is an exemplary conformal antenna pattern;
Figure 4c is an exemplary conformal antenna pattern;
Figure 4d is an exemplary conformal antenna pattern;
Figure 4e is an exemplary conformal antenna pattern;
Figure 4f is an exemplary conformal antenna pattern;
Figure 4g is an exemplary conformal antenna pattern;
Figure 4h is an exemplary conformal antenna pattern; and
Figure 4i is an exemplary conformal antenna pattern.

### DETAILED DESCRIPTION

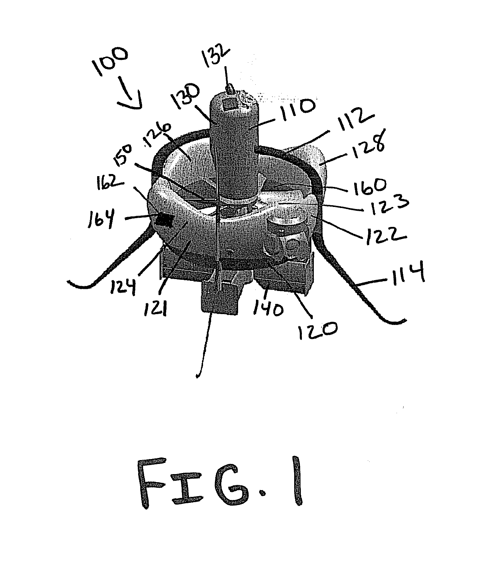

Figure 1 depicts a perspective view of an unmanned aerial vehicle ("UAV") 100 according to one embodiment of the present invention. UAV 100 may be remotely controlled, or may be self-controlled for a particular journey. UAV 100 may be the UAV described in U.S. Application Serial No. 12/179,690, "Ducted Fan Core for Use with an Unmanned Aerial Vehicle," which is incorporated herein by reference.

UAV 100 comprises a center body 110, a frame 120, an engine 130, a plurality of control vanes 140, a fan 150, a duct portion 160, a plurality of bars (not shown), a plurality of actuators (not shown), a gearbox assembly (not shown), a plurality of support arms 112, and an exhaust port 132. Duct portion 160 comprises a conformal antenna 162 on a surface 164. Duct portion 160 may comprise the entire shape of the UAV. Surface 164 may be an exterior surface of duct portion 160, as shown in Figure 1. Additionally, landing feet 114 are attached to the plurality of support arms 112, and serve to raise the UAV from the ground, enabling control vanes 140 to move so that the vehicle may be prepared for take off.

The center body 110 contains engine 130, which powers the UAV. Engine 130 may be a turbine engine. However, engine 130 is not limited to this type of engine, and other engine types may be used. Exhaust port 132 may be attached to and in fluid communication with engine 130, and may serve as an opening from center body 110 to allow exhaust fumes to exit engine 130. Center body 110 may also contain a gearbox assembly. The gearbox assembly may operate to control engine 130. For example, the gearbox assembly is connected to fan 150 and may control how quickly engine 130 rotates the blades of fan 150. Center body 110 may also contain additional components for vehicle operation, such as an avionics system.

Support arms 112 may attach center body 110 to frame 120. Each bar of the plurality of bars is attached to a control vane 140, and extends between frame 120 and the control vane. The plurality of bars serves to stabilize the plurality of control vanes 140. Control vanes 140 direct the airflow to guide the direction of UAV 100 in flight.

UAV 100 may include pods attached to frame 120, such as pods 122, 124, 126, and 128. The pods may be easily removed from and reattached to frame 120. The pods can be interchanged as units without disassembly of the pod itself. The pods may be used for carrying various payloads. In a UAV, the payload may carry equipment or instruments, for example. More specifically, a pod may carry cameras, fuel, gas, or electronics. For example, pods can be fuel pods or pods housing electronic transportation gear. Each pod may comprise an outer shell 121 and a leading edge 123. A leading edge is a line connecting the forward-most points of the pod's profile; it is the front edge of the pod. When an aircraft moves forward, the leading edge is the part that first contacts the air. The shape of each pod may be such that when the pods are affixed to frame 120, the pods form an exterior portion of UAV 100. Air may flow over both the outer-facing side of outer shell 121 and the interior-facing side of outer shell 121. The interior-facing side of outer shell 121 may be shaped so that as air hits the leading edge, the air is guided down the interior-facing side and hits fan 150.

However, the conformal antenna of the present invention is not limited to the modular construction illustrated in Figure 1. Alternatively, UAV 100 may not comprise individual pods but instead may be a circular singular duct.

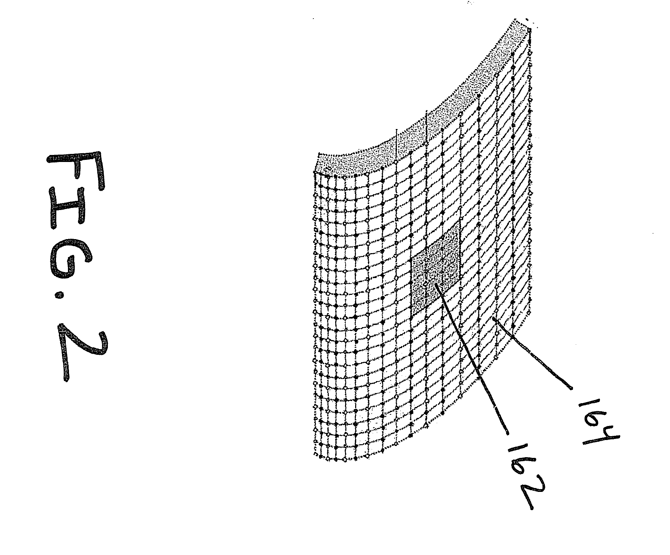

Conformal antenna 162 is located on surface 164. A surface 164 of the duct portion is shown in Figure 2 with conformal antenna 162 on the surface. If UAV 100 does not comprise ducts, but instead is a circular singular duct, conformal antenna 162 will be on the singular duct. As an alternative, conformal antenna 162 could be embedded in the wings of a winged UAV, or in the fuselage.

UAV 100 is particularly well suited for the application of conformal antenna 162 because as a ducted fan UAV, there is considerable exterior surface area. UAV 100 may not have a metal skin over the vehicle framework. The non-metallic skin of ducted fan UAV 100 provides many large, relatively flat surfaces 164 on which half or full wavelength conformal antennas 162 can be designed. Conformal antennas may be placed in a variety of antenna patterns, and because there is such a large surface area over which conformal antenna 162 can be designed, a radiation pattern for transmission and reception in virtually any orientation of UAV 100 is possible. The half or full wavelength waves give improved gain over the quarter wave wavelengths used by weight-constrained whip antennas. Thus, clear video transmission and uninterrupted command and control signals may be sent and received from any orientation, and total coverage may be improved. The signals sent or received may provide position, guidance, or navigation information.

As shown in Figure 2, conformal antenna 162 may be integrated directly into the mold that is used to form surface 164. In this situation, conformal antenna 162 would be integrated into the mold prior to forming the duct surface. Conformal antenna 162 may be comprised of a material thin and flexible enough so that conformal antenna 162 takes the shape of duct portion 160. This provides an advantage over a whip antenna, which is vertical from its ground plane and is unable to take the shape of duct portion 160. To integrate conformal antenna 162 to the duct surface, an application would determine both the type and size of the antenna selected, and the antenna may be created on a very thin flexible substrate of deposited and then patterned copper, and backed with an adhesive which is then applied to the duct or surface. Conformal antenna 162 does not have to be made from copper, however, and may be made from any conductive metal or material.

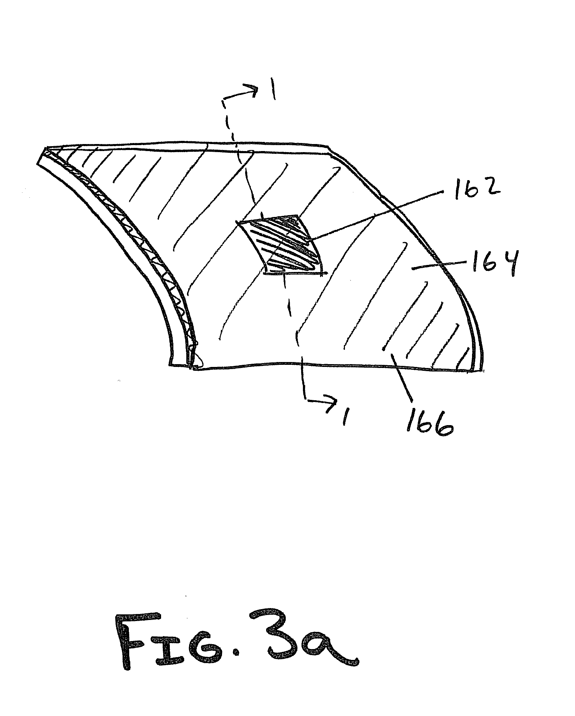

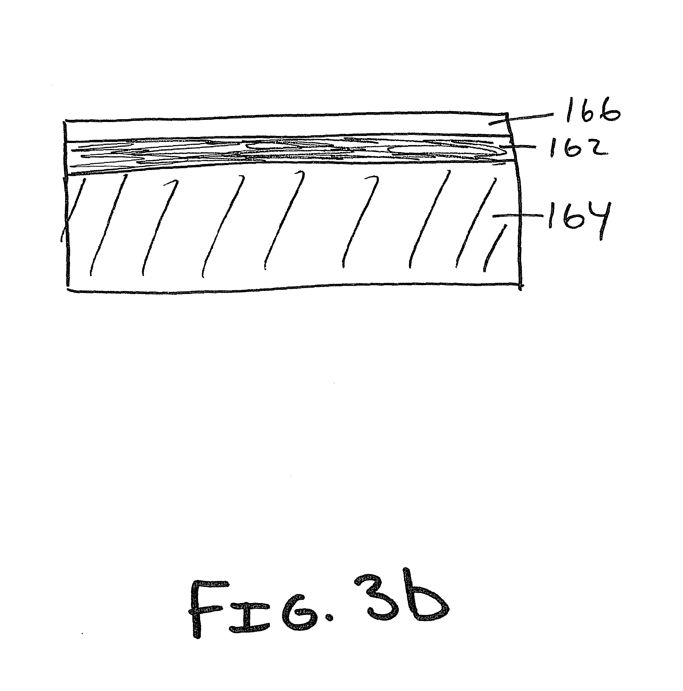

Alternatively, as shown in Figures 3a and 3b, conformal antenna 162 could be applied to an already formed duct surface. When conformal antenna 162 is applied to an already formed, finished duct surface, a layer 166 to cover conformal antenna 162 may be applied. The layer 166 may be applied over conformal antenna 162 to cover and protect the antenna. Figure 3b is a cross-sectional view taken at cross section 1-1 of Figure 3a, and shows conformal antenna 162 on top of surface 164, and layer 166 on top of conformal antenna 162. Layer 166 may be an epoxy covering.

Conformal antenna 162 is made to operate in a variety of weather conditions, including rain and moderate winds.

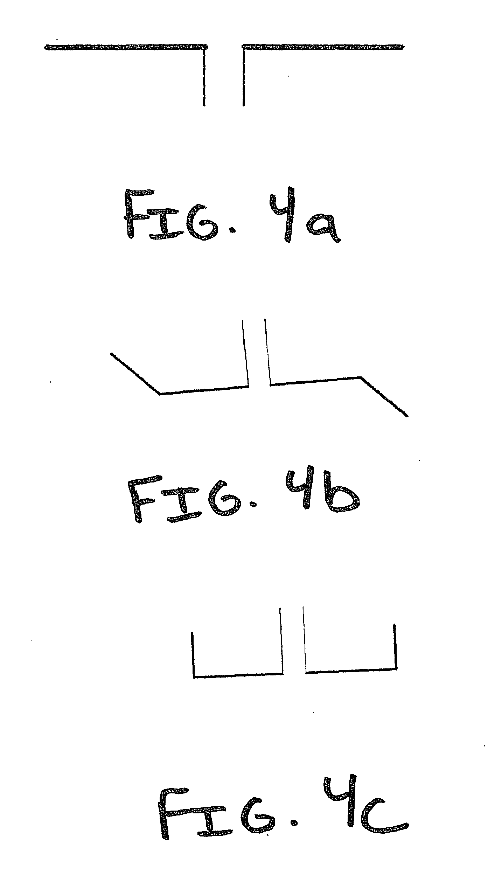

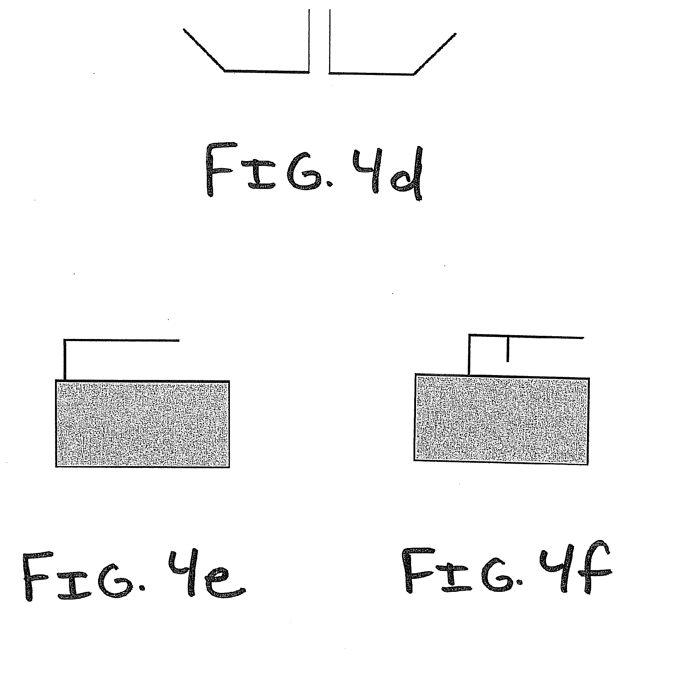

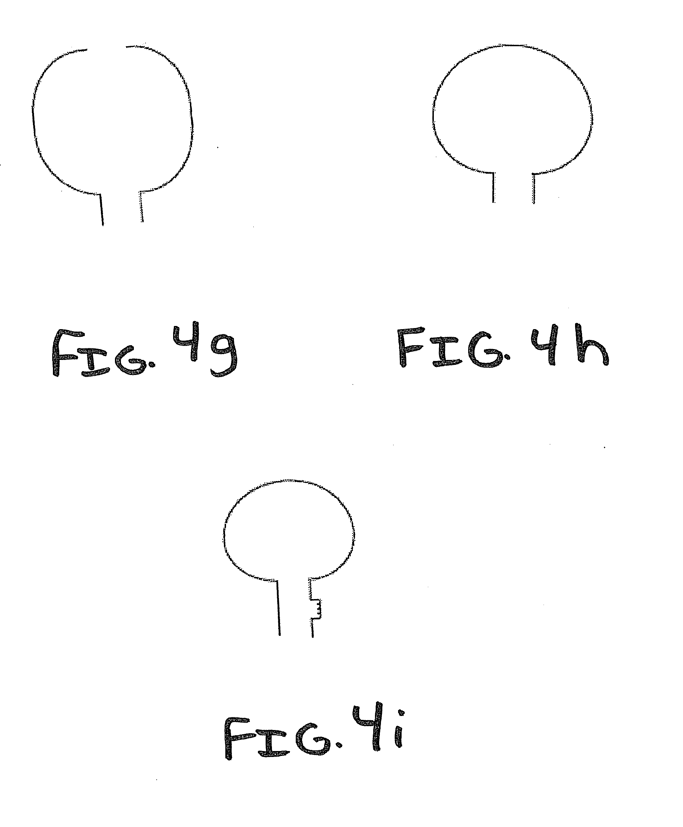

Conformal antennas 162 may comprise a range of sizes, and thus the actual placement and proximity of conformal antennas 162 is preferably simulated for each design. Figures 4a-4i illustrate some examples of antenna shapes that can be integrated onto the duct surface. Antennas as simple as a dipole may be used, as shown in Figure 4a. Figures 4b, 4c, and 4d illustrate dipole shapes designed to improve omnidirectional characteristics. Figure 4e shows a tilted whip and Figure 4f shows an F-antenna. Figures 4g, 4h, and 4i show loop antennas. Figure 4g illustrates a full wave loop antenna, Figure 4h a half antenna, and Figure 4i a series-loaded loop antenna. Conformal antenna 162 may also comprise matching elements, such as chip resistors or chip caps, which can be integrated onto the antenna surface to improve antenna performance. The duct surface, like a printed wiring board, comprises a good surface for the placement of matching components.

The UAV 100 may be designed to be transported in a backpack. More specifically, the UAV may be transported in a modular lightweight load carrying equipment pack ("MOLLE"). The MOLLE pack is a fully integrated, modular load bearing system consisting of a load bearing vest with butt pack, main ruck with sustainment pouches and sleeping bag compartment attached to an external frame. UAV 100 may weigh approximately 6-8 lbs. However, UAV 100 may weigh more or less than this value, depending on materials used and size. Conformal antenna 162 comprises an extremely low weight, which is one of its advantages. The weight would be in the ounce range.

UAV 100 may operate at altitudes of 100 to 500 feet above ground level, and typically the UAV will fly between 10 and 500 feet above the ground. Portable ground stations may be used to guide the aircraft and receive images from the cameras. The ground station can be used to program a flight path for the UAV or control it manually. The aircraft can also be equipped with electro-optical cameras for daylight operations or infrared cameras for night missions.

In operation, once the vehicle has launched, control vanes 140 may be adjusted based on signals received through conformal antenna 162. The actuated control vanes 140 will move in response to the received signals, altering the course of airflow from fan 150 and guiding the direction of flight for the UAV. During flight, conformal antenna 162 is also used to transmit signals. The transmitted signals may tell of the UAV's location, flight speed, any detected upcoming obstacles, as well as other information.

The UAV may run autonomously, executing simple missions such as a program or reconnaissance, or it may run under the control of a crew. The crew may comprise a pilot and sensor operators. The pilot may drive the aircraft using controls that transmit commands over a C-band line-of-sight data link, or a Ku-Band satellite link. The aircraft may receive orders via an L-3 Com satellite data link system. The pilots and other crew members use images and radar received from the aircraft to make decisions regarding control of the UAV.

## Claims

1. A ducted fan comprising:
a frame;
a first surface on the frame; and
at least one conformal antenna, wherein the at least one conformal antenna is integrated on at least a portion of the first surface on the frame.

2. The ducted fan of claim 1, further comprising an engine.

3. The ducted fan of claim 1, wherein the first surface is formed using a mold.

4. The ducted fan of claim 3, wherein the at least one conformal antenna is integrated into the mold prior to forming the first surface.

5. The ducted fan of claim 1, wherein the conformal antenna is applied to a finished duct surface.

6. The ducted fan of claim 5, further comprising a protective layer overlaying the first surface of the conformal antenna.

7. The ducted fan of claim 1, wherein the first surface comprises substantially the entire exterior surface of the ducted fan.

8. The ducted fan of claim 1, wherein the conformal antenna provides a radiation pattern for the reception of command signals.

9. The ducted fan of claim 1, wherein the conformal antenna provides a radiation pattern for the reception of control signals.

10. The vehicle of claim 1, further comprising a second surface, wherein a conformal antenna
of the at least one conformal antenna is integrated on at least a portion of the second surface.
